# EUROPEAN PATENT SPECIFICATION

(11) **EP 0 906 230 B1**
(45) Date of publication and mention of the grant of the patent: **26.11.2003**
(21) Application number: 97926335.7
(22) Date of filing: 30.05.1997
(51) Int. Cl.: B65G 15/08, B65G 15/36

(54) **CONVEYOR BELT**
FÖRDERBAND
BANDE TRANSPORTEUSE

(30) Priority: 31.05.1996 SE 9602126
(43) Date of publication of application: 07.04.1999
(73) Proprietor: Loodberg, Torsten, 260 41 Nyhamnsläge (SE)
(72) Inventor: Loodberg, Torsten, 260 41 Nyhamnsläge (SE)
(74) Representative: Berglund, Gustav Arthur
(86) International application number: SE9700938
(87) International publication number: WO97045342

(56) References cited:
- WO-A-87/03565
- WO-A-90/03930
- DE-A- 4 213 645
- DE-A- 4 302 214
- GB-A- 2 205 543
- SE-B- 445 337
- US-A- 3 164 238
- US-A- 4 410 082

## Description

The present invention relates to a conveyor belt for conveying goods in solid or liquid state, said conveyor belt comprising a goods-carrying endless element made of an elastic material, and a single belt-supporting wire which is fixedly connected to one lateral edge of the endless element.

There are prior-art conveyor belts comprising a goods-supporting endless element, which is made of an elastic material and on which one or more force-absorbing wires are arranged. This wire or these wires is/are intended for guiding and supporting the conveyor belt by means of rollers, which determine the path of the conveyor belt. Owing to the elastic material of the conveyor belt, this type of conveyor belt obtains a high flexibility, which, for instance, facilitates the manufacture of belt conveyors with a plurality of changes of direction along the conveying path.

GB-A-2,205,543 discloses e.g. a conveyor belt, which comprises a goods-carrying endless element made of an elastic material, and a single belt-supporting wire which is arranged along one lateral edge of the endless element. The other lateral edge of the endless element is pre-bent to allow it to be hooked over said one lateral edge of the endless element with the force-absorbing wire. This results in a closed space for conveyance of goods. This known construction requires a great distance between the support rollers and unhooking of the other lateral edge from the force-absorbing wire to allow emptying of the goods. The loading and emptying procedure will thus be complicated in this known type of conveyor belt.

The object of the present invention is to provide a conveyor belt having the same flexibility as the prior-art conveyor belts of the type stated by way of introduction, but at the same time reducing the drawbacks connected with the prior-art conveyor belts. A further object of the present invention is to provide a very simple conveyor belt, which may be designed for both open and closed conveyance of goods in solid or liquid state.

According to the invention, the above-mentioned objects are achieved by a conveyor belt of the type stated by way of introduction being given the features that appear from the appended claim 1. Preferred embodiments of this conveyor belt are stated in the dependent claims.

According to the invention, the endless element thus is designed such that in cross-section and in its unloaded state, i.e. when not affected by any external forces, it has the form of a hook for forming a goods-receiving space. Moreover, the endless element should have sufficient rigidity in the transverse direction of the conveyor belt in order to essentially retain the hook shape when conveying goods in the goods-receiving space, the other lateral edge of the endless element being essentially free, i.e. not serving any belt-supporting purpose by direct coaction with support or guide rollers. This design makes it possible to provide a belt conveyor, which in addition to the conveyor belt requires a very small number of support rollers, which coact with the force-absorbing wire, while loading of goods into the conveyor belt and unloading of goods from the conveyor belt can be carried out very easily.

In an embodiment of the conveyor belt according to the invention, the hook shape is essentially open in the unloaded state of the conveyor belt. This may be advantageous, for instance, when conveying goods in solid state, which may then be loaded into the goods-receiving space of the conveyor belt in essentially arbitrary points along the conveying path.

When a closed conveyance of goods is desirable, the inventive conveyor belt can, as an alternative, in one embodiment have a hook shape, which is essentially closed in the unloaded state of the conveyor belt. With this design, it will be possible to easily effect conveyance of goods in other directions than purely horizontal.

The closed hook shape can be achieved by a suitable design of the endless element. A reinforcement of the closure can be achieved by the other lateral edge of the endless element being provided with a reinforcing element, e.g. a wire, which like the force-absorbing wire can be integrated with the conveyor belt and formed of or surrounded by the material thereof.

If the other lateral edge of the endless element has a reinforcement with a smaller degree of extensibility in the longitudinal direction of the conveyor belt than the elastic material, such a conveyor belt with an open hook shape can be closed by being twisted around its longitudinal direction, i.e. said reinforcement is achieved.

The invention will now be described in more detail for the purpose of exemplification with reference to the accompanying drawings.

Fig. 1 is a perspective view of a longitudinal part of an embodiment of the conveyor belt according to the present invention.

Figs 2A-F are sectional views of various embodiments of a conveyor belt according to the present invention.

Fig. 3 is a perspective view of a belt conveyor, which employs a conveyor belt according to the present invention.

Fig. 4 is a perspective view of another belt conveyor, which employs a conveyor belt according to another embodiment of the present invention.

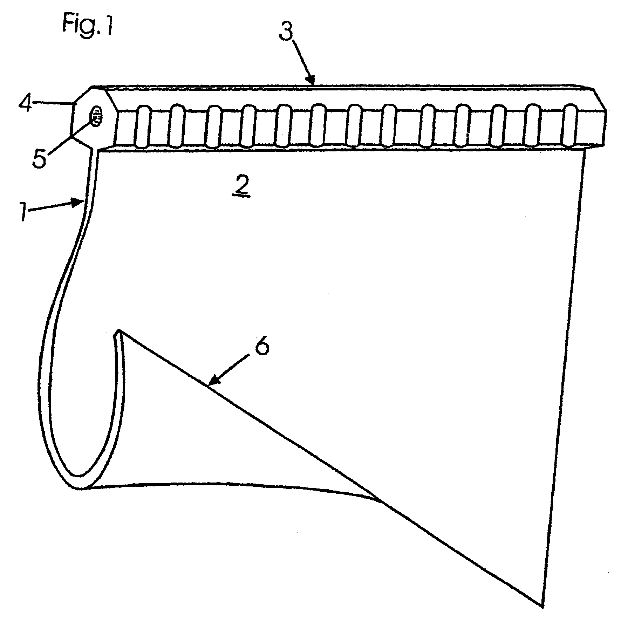

The embodiment of a conveyor belt 1 according to the present invention as shown in Fig. 1 comprises an elastic belt element 2 of a cross-section, which in the unloaded state of the conveyor belt 1 has the hook shape which is illustrated in the front part of the conveyor belt 1 in the perspective view, i.e. about the same shape as an inverted question mark. By being affected from outside, the belt element 2 can be straightened to an essentially rectilinear shape, as illustrated in the rear part of the perspective view in Fig. 1.

At its upper lateral edge 3, the conveyor belt 1 has a force-absorbing wire 4, which is integrated with the belt element 2. The force-absorbing wire 4 can be made of the same material as the belt element 2 and only have a greater thickness than this, i.e. constitute an expanded part of the goods-receiving endless element 2, but the wire 4 must be relatively non-extensible in its longitudinal direction to be able to serve as force absorber and belt carrier. The wire 4 may also have a central reinforcement 5 in the form of a cord or the like, such that the entire tensile force acting on and the tension in the conveyor belt 1 are received by the reinforcement 5 and the wire 4, respectively. As shown in Fig. 1, the wire 4 can as to its exterior, have the shape of two V-belts arranged back to back to facilitate symmetrical engagement with rollers for supporting the conveyor belt 1 and guiding the path of travel thereof. The V-belts in Fig. 1, which are fixedly interconnected back to back, may be toothed at their narrower portion, as shown in Fig. 1, thereby facilitating the bending of the conveyor belt 1 through curves.

The belt element 2, which can be made of such an elastic material as plastic or rubber, has, however, sufficient rigidity in the transverse direction of the conveyor belt for essentially retaining, in its unloaded and also in its goods-carrying state, the shape as shown in the front part of the perspective view in Fig. 1.

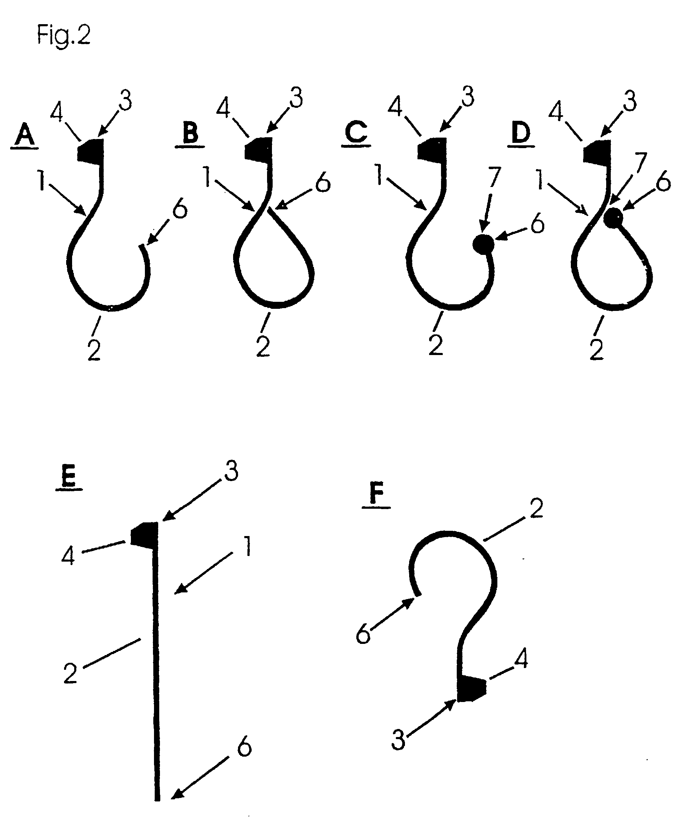

Fig. 2 shows some different embodiments of the conveyor belt 1, the wire 4 being shown as a single V-belt. The conveyor belt 1 shown in Fig. 2A corresponds to that shown in Fig. 1. The conveyor belt 1 shown in Fig. 2B differs from that in Fig. 2A by being in its unloaded state closed owing to the other longitudinal edge 6 of the conveyor belt 1 engaging one side of the conveyor belt 1.

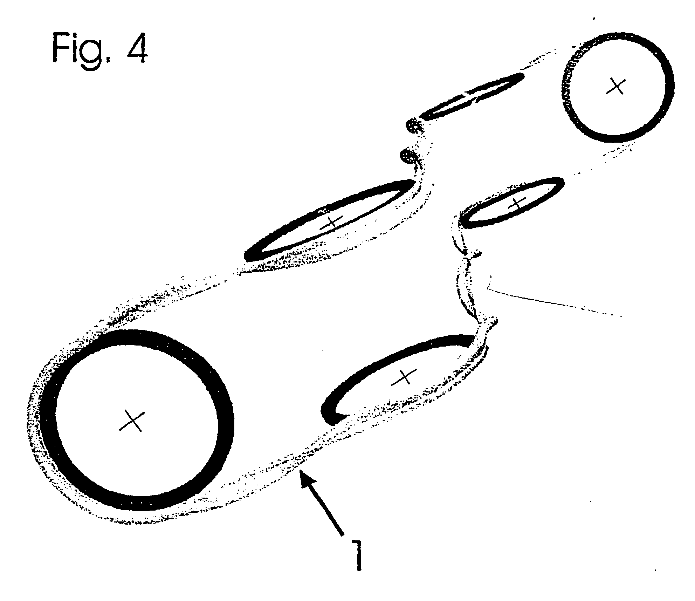

The embodiment in Fig. 2C conforms with the embodiment in Fig. 2A with the difference that an edge reinforcement 7 is arranged at the other longitudinal edge 6 of the conveyor belt 1. This reinforcement 7 is not intended to coact with rollers, which support or guide the conveyor belt 1, but may be used to establish a closure of the belt by twisting it around its longitudinal direction. An example of such use is shown with the aid of the conveyor in Fig. 4. The edge reinforcement 7 need not have a greater thickness than the belt element 2 and can, in its simplest form, constitute a wearing edge, i.e. have a greater capacity of resistance to wear than the belt element 2.

The conveyor belt 1 shown in Fig. 2D conforms with the one in Fig. 2B, but has the reinforcement 7 at its longitudinal edge 6. This embodiment results in a slightly better closure of the belt along belt portions where the conveyor belt 1 is not twisted around its own longitudinal direction.

It will be appreciated that loading of goods into the conveyor belt 1 can take place without the shape of the conveyor belt 1 being affected, if this is of the type illustrated in Fig. 2A or 2C. For loading of goods into a conveyor belt 1 of the type as shown in Fig. 2B or 2D, a filling device is required, which opens the conveyor belt 1 at the other longitudinal edge 6 thereof, thereby obtaining a passage down into the goods-receiving space of the conveyor belt 1, and for the feeding of the goods through the passage it is possible to use e.g. a hopper.

For emptying the conveyor belt 1 of its goods, it can either be stretched in the manner shown in Fig. 2E or be guided to an inverted position, as shown in Fig. 2F.

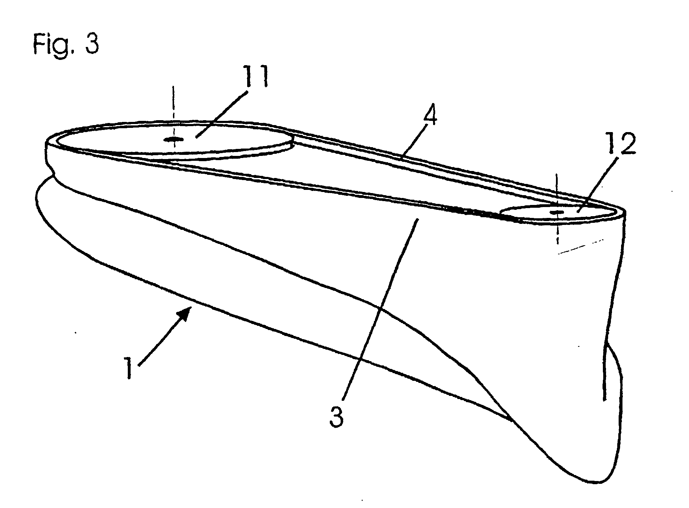

Fig. 3 shows a very simple belt conveyor with two deflection rollers 11 and 12, by means of which a straight goods-conveying path is provided from the roller 11 to the roller 12 and a straight return path from the roller 12 to the roller 11. By giving the roller 12 a sufficiently small diameter, the conveyor belt 1 can be made to retain an essentially completely straightened shape when passing round the roller 12. Thus, automatic emptying of goods is achieved when the belt has reached the roller 12.

Such emptying of the conveyor belt 1 as shown in Fig. 3 places relatively high demands on the material of the conveyor belt 1 owing to its being straightened and bent together repeatedly. By instead turning the conveyor belt upside down a mode of emptying is achieved, which places considerably lower demands on the material of the conveyor belt 1. For instance, the conveyor belt 1 can then be made by extrusion of some suitable plastic material, which can make the conveyor belt 1 extremely cheap. Emptying the conveyor belt by turning it upside down certainly also results in an increase of the life of the conveyor belt 1.

The conveyor belt shown in Fig. 4 utilises such a conveyor belt 1 as shown in Fig. 2C or 2D. With a view to determining the path of the conveyor belt 1 in Fig. 4, use is made of a plurality of rollers having a relatively large diameter, and the conveyor belt 1 is twisted around its longitudinal direction in the portions between the rollers. When the conveyor belt 1 according to Fig. 2C or 2D is twisted around its longitudinal axis, the wire 4 and the reinforcement 7 will be twisted together like the strands of a rope, thereby establishing a seal and obtaining a completely closed goods-receiving space. In this state, bulk goods can also be conveyed vertically. In fact, the conveyed goods rotate around the longitudinal axis of the conveyor belt 1 and are pressed out by the centrifugal force towards the bottom of the hook. Even if the belt is positioned upside down, the goods will not lie against the seal formed by the reinforcement 7. For emptying the conveyor belt, use can in this case be made of a straight stretch, where the belt is not twisted but travels open upside down. In this position the belt opens quite automatically.

The reinforcement 6 should be designed so as to be stretched to about the same extent as the wire 4, but not come into contact with the wire even when the conveyor belt 1 is twisted.

The material of the belt element 2 must be able to stretch so as not to absorb tensile forces in the longitudinal direction of the conveyor belt 1. All support and guide rollers should be in engagement with the wire 4 only. If, as shown in Fig. 1, this has the shape of two V ropes which are inverted towards the back, it is easy to twist it both in right and left turns, to find room for stands for suspension rollers and to let it enter guide rollers. All external forces on the conveyor belt 1 are exerted via the wire 4, and owing to the symmetrical appearance of the wire, the same type of support and guide rollers can be used on both sides thereof.

It is important that the reinforcement 5 is located in the centre of the wire 4, such that the symmetry makes it equally easy to twist the conveyor belt 1 to the right and to the left. When bending the wire 4 sideways, it is desirable for it to be narrow, such that the stretching of the material of the wire in the outer curve does not become too great. For supporting the conveyor belt 1, it is on the other hand advantageous if the wire 4 has as wide a profile as possible since gravitational and centrifugal forces are to be absorbed by the lower surfaces of the wire profile on both sides of the hanging belt element 2. One possibility is then, as shown in Fig. 1, that the narrow sides of the wire 4 facing away from the belt element 2 are toothed.

As described above, the emptying of the belt can be carried out in various ways. The simplest way is to empty the belt adjacent to such a small terminal roller as the deflection roller 12 in Fig. 3. If emptying is to take place along a straight stretch, the same principle can be applied. Then two deflection rollers are used, the positioning thereof being such that the conveyor belt 1 follows an S-shaped path, which can extend either in the horizontal plane or in the vertical plane.

A number of modifications of the described embodiments are obviously possible within the scope of the invention as defined by the appended claims.

## Claims

1. A conveyor belt for conveying goods in solid or liquid state, said conveyor belt comprising a goods-carrying endless element (2) made of an elastic material, and a single belt-supporting wire (4) which is fixedly connected to one lateral edge (3) of the endless element, **characterised in that** the endless element (2), in cross-section and in its unloaded state, essentially has the form of a hook for forming a goods-receiving space, and that the endless element is sufficiently rigid in the transverse direction of the conveyor belt to essentially retain the hook shape when conveying goods in the goods-receiving space.

2. A conveyor belt as claimed in claim 1, **characterised in that** the hook shape is essentially open in the unloaded state of the conveyor belt.

3. A conveyor belt as claimed in claim 1, **characterised in that** the hook shape is essentially closed in the unloaded state of the conveyor belt.

4. A conveyor belt as claimed in any one of claims 1-3, **characterised in that** the wire (4) is an expanded part of the goods-receiving endless element (2).

5. A conveyor belt as claimed in any one of claims 1-4, **characterised in that** the wire (4) has a reinforcement (5) which is integrated with the conveyor belt and surrounded by the material thereof.

6. A conveyor belt as claimed in claim 5, **characterised in that** the wire (4) has a shape adapted to coact with support and guide rollers.

7. A conveyor belt as claimed in claim 6, **characterised in that** the cross-section of the wire (4) is in the form of two V-belts fixedly interconnected back to back.

8. A conveyor belt as claimed in any one of claims 1-7, **characterised in that** the other lateral edge (6) of the endless element (2) has a reinforcing element (7).

9. A conveyor belt as claimed in any one of claims 1-8, **characterised in that** it is made of rubber or plastic.

10. A conveyor belt as claimed in claim 7, **characterised in that** the reinforcement (5) is symmetrically positioned in the wire (4).

## Patentansprüche

1. Förderband zum Befördern von Gütem in festem oder flüssigem Zustand, wobei das Förderband ein endloses Güter-Transportelement (2), das aus einem elastischen Material besteht, und einen einzeln bandtragenden Draht (4) umfasst, der fest mit einer Querkante (3) des endlosen Elementes verbunden ist, **dadurch gekennzeichnet, dass** das endlose Element (2) im Querschnitt und in seinem unbeladenen Zustand im Wesentlichen die Form eines Hakens hat, um einen Güter-Aufnahmeraum zu bilden, und dass das endlose Element in Querrichtung des Förderbandes starr genug ist, um im Wesentlichen die Hakenform beizubehalten, wenn Güter in dem Güter-Aufnahmeraum befördert werden.

2. Förderband nach Anspruch 1, **dadurch gekennzeichnet, dass** die Hakenform im unbeladenen Zustand des Förderbandes im Wesentlichen offen ist.

3. Förderband nach Anspruch 1, **dadurch gekennzeichnet, dass** die Hakenform im unbeladenen Zustand des Förderbandes im Wesentlichen geschlossen ist.

4. Förderband nach einem der Ansprüche 1-3, **dadurch gekennzeichnet, dass** der Draht (4) ein verlängerter Teil des endlosen Güter-Aufnahmeelementes (2) ist.

5. Förderband nach einem der Ansprüche 1-4, **dadurch gekennzeichnet, dass** der Draht (4) eine Verstärkung (5) aufweist, die in das Förderband integriert ist und vom Material desselben umschlossen wird.

6. Förderband nach Anspruch 5, **dadurch gekennzeichnet, dass** der Draht (4) eine Form hat, die so eingerichtet ist, dass sie mit Stütz- und Führungswalzen zusammenwirkt.

7. Förderband nach Anspruch 6, **dadurch gekennzeichnet, dass** der Querschnitt des Drahtes (4) die Form von zwei Keilriemen hat, die an ihren Rückseiten fest miteinander verbunden sind.

8. Förderband nach einem der Ansprüche 1-7, **dadurch gekennzeichnet, dass** die andere Querkante (6) des endlosen Elementes (2) ein Verstärkungselement (7) aufweist.

9. Förderband nach einem der Ansprüche 1-8, **dadurch gekennzeichnet, dass** es aus Gummi oder Kunststoff besteht.

10. Förderband nach Anspruch 7, **dadurch gekennzeichnet, dass** die Verstärkung (5) symmetrisch in dem Draht (4) angeordnet ist.

## Revendications

1. Bande transporteuse pour transporter des marchandises à l'état solide ou liquide, ladite bande transporteuse comprenant un élément sans fin (2) portant les marchandises, qui est réalisé en un matériau élastique, et un fil unique (4) de support de bande, qui est raccordé de façon fixe à un bord latéral (3) de l'élément sans fin, **caractérisée en ce qu'**en coupe transversale et dans son état non chargé, l'élément sans fin (2) possède essentiellement la forme d'un crochet pour former un espace de réception de marchandises, et que l'élément sans fin est suffisamment rigide dans la direction transversale de la bande transporteuse pour conserver essentiellement la forme de crochet lors du transport de marchandises dans l'espace de réception de marchandises.

2. Bande transporteuse selon la revendication 1, **caractérisée en ce que** la forme de crochet est essentiellement ouverte lorsque la bande transporteuse est à l'état non chargé.

3. Bande transporteuse selon la revendication 1, **caractérisée en ce que** la forme de crochet est essentiellement fermée lorsque la bande transporteuse est à l'état non chargé.

4. Bande transporteuse selon l'une quelconque des revendications 1 à 3, **caractérisée en ce que** le fil (4) est une partie prolongée de l'élément sans fin (2) qui reçoit les marchandises.

5. Bande transporteuse selon l'une quelconque des revendications 1 à 4, **caractérisée en ce que** le fil (4) possède un renfort (5) qui est intégré à la bande transporteuse et est entouré par le matériau de cette dernière.

6. Bande transporteuse selon la revendication 5, **caractérisée en ce que** le fil (4) possède une forme adaptée pour coopérer avec des rouleaux de support et de guidage.

7. Bande transporteuse selon la revendication 6, **caractérisée en ce que** la section transversale du fil (4) se présente sous la forme de deux courroies en V raccordées de façon fixe à dos-à-dos.

8. Bande transporteuse selon l'une quelconque des revendications 1 à 7, **caractérisée en ce que** l'autre bord latéral (6) de l'élément sans fin (2) possède un élément de renfort (7).

9. Bande transporteuse selon l'une quelconque des revendications 1 à 8, **caractérisée en ce qu'**elle est réalisée en caoutchouc ou en matière plastique.

10. Bande transporteuse selon la revendication 7, **caractérisée en ce que** le renfort (5) est disposé symétriquement dans le fil (4).
